# EUROPEAN PATENT SPECIFICATION

(11) **EP 0 586 519 B1**
(45) Date of publication and mention of the grant of the patent: **13.09.2000**
(21) Application number: 92912175.4
(22) Date of filing: 26.05.1992
(51) Int. Cl.: B08B 7/00, C02F 1/28, C05F 11/02, C05F 11/08, A01N 57/18, C07F 9/40, C05G 3/04, C09K 17/00, C05G 3/02

(54) **METHOD OF TREATING SOIL**
VERFAHREN ZUR BODENBEHANDLUNG
PROCEDE DE TRAITEMENT DES SOLS

(30) Priority: 04.06.1991 US 709837; 07.06.1991 US 711911
(43) Date of publication of application: 16.03.1994
(73) Proprietor: SOTAC CORPORATION, El Centro, California 92244 (US)
(72) Inventor: SYLLING, Truman V., El Centro, CA 92243 (US); BOYD, Larry, C., Wellton, AZ 85356 (US); ALLEN, Stephen, L., San Diego, CA 92126 (US)
(74) Representative: W.P. Thompson & Co.
(86) International application number: US9204419
(87) International publication number: WO9221452

(56) References cited:
- EP-A- 0 203 734
- EP-A- 0 300 947
- US-A- 4 070 178
- US-A- 4 388 102
- US-A- 4 687 505
- US-A- 4 808 215
- HOWARD AND NEAL: "DICTIONARY OF CHEMICAL NAMES", 1992, LEWIS PUB, * Pages I-1112;I-663;I-645;I-553;I-346 *
- BENNET: "CONCISE CHEMICAL AND TECHNICAL DICTIONARY", 1974, CHEMICAL PUBLISHING CO, * PAGES 38,113 *

## Description

### Technical Field

The invention relates generally to a method for destroying unwanted organisms in agricultural soils and more particularly to a method for eradicating weeds in agricultural soils

### Background Art

The presence of salts, and other unwanted substances, in soils, such as agricultural soils, and their adverse effects on plant proliferation, have long been recognized. The salts, such as chlorides, carbonates and sulfates of sodium, potassium, calcium and magnesium, are often already present in the soil, prior to planting. In addition, in some cases, salts are introduced into the soil through the use of irrigation water.

In general, the effect of salts on plants is indirect. In this regard, the salts adversely affect osmotic water potential with a resulting reduction in uptake of water by germinating seeds and the roots of established plants. The presence of salts in soils can result in a fewer number of seeds becoming properly established. Also, there can be an undesirable delayed rate of seed establishment, as well as an impairment in the growth of established plants.

Due to such severe adverse effects of salts on plants, it has been long recognized that compositions and methods of using the same, capable of reducing such adverse influences would have great utility. Important advances in the art are the methods and compositions disclosed in U.S. patents 4,687,505 and 4,923,500, as well as in the foregoing mentioned U.S. patent applications.

With regard to the above mentioned patents, there is disclosed techniques for the application of certain anionic materials, or their substantially neutral water soluble salts, to soil in minute amounts, for reducing the harmful effects of salts which had accumulated in the soil from irrigation water, or which were previously present in the soil. In this manner, salts were leached from the soil by the application of a liquid, such as irrigation water. These patented compositions are effective because large areas of soil are treated, prior to planting, by the addition of the anionic materials to irrigation water or by other methods of application applied to the fields generally.

Such patented methods and compositions are highly effective in reducing soil salinity, and have proven to increase plant proliferation and quality as well as increased yield when used in crop production. Of course, other soil conditioning products are required to facilitate plant growth. Water and fertilizer are also used to help plant proliferation. Such substances help to nourish the plants, so that they can grow in a healthy and vigorous manner. However, in some situations, conventional fertilizers may not be entirely satisfactory for facilitating adequate nourishment uptake by plants. In such situations, the plants may not be able to thrive in a vigorous and healthy manner, even when conventional fertilizers are applied. In order to overcome such an inadequate nourishment problem, the improved fertilizers disclosed herein have been developed.

In addition to the foregoing mentioned impediments of unwanted salt and inadequate nourishment uptake, the presence of weeds and germinating weed seeds in soil, such as agricultural soils, can cause an adverse affect on plant proliferation. The weeds, and weed seeds, are often already present in the soil, prior to planting. Subsequent to planting, when irrigation water and fertilizers are applied, the weeds compete with the desired plants and, in general, can rob the desired plants of nutrients necessary for root establishment and healthy plant growth. Thus, weeds directly compete with the desired plants for the assimilation of essential nourishment, and the presence of weeds and weed seeds can cause directly the reduction of the quantity, and the quality, of the desired plants.

In addition, at the time of harvesting, the presence of the unwanted and undesirable weeds presents more difficulties for the grower. In this regard, methods have to be adopted for either removing the weeds before harvesting, or for removing the weeds from the crop, after harvesting. The weed removal is often labor intensive and, as a result, both expensive and time consuming.

In view of the foregoing, it is clear that the presence of weeds and weed seeds, in agricultural or other planting soils, can cause substantial economic loss to growers, both by reduction of yields and by increased labor costs for weed removal. Thus, it has long been recognized that compositions and methods for weed control have significant economic value. Because of the well recognized need for such compositions and methods, various herbicidal compositions have been developed. In some cases, when such a composition is applied properly to a moist soil, the liquid is converted into a gaseous in-ground fumigant for controlling both weeds and germinating weed seeds. In addition, some known herbicides have utility for controlling nematodes and other soil-borne diseases such as Rhizoctonia, which also, of course, adversely impact plant growth.

Prior known herbicides, and conventional methods of using them, are effective in reducing weed populations in soils and thereby increasing plant proliferation and plant quality, as well as increased yield. However, for some applications and under certain growing conditions, these known herbicides have not performed in an entirely satisfactory manner. Thus, for a variety of reasons, more effective herbicides for the control of weeds and weed seeds in planting soil is highly desirable.

In order to illustrate the problem, it is well recognized by those skilled in the art that some weeds, especially nutgrass, are especially difficult to control. It has been found, for example, that even after a proper application of a known herbicide to agricultural soils, the number of weeds irradicated generally does not exceed approximately 80 percent. Thus, in many instances, about 20 percent of the weeds remain in the field, after conventional herbicide treatment. Such a percentage of a remaining number of weeds, is known to be undesirable and unwanted in many agricultural growing situations. In this regard, with such a high percentage of the weeds surviving, the desired crop is often so adversely affected that the crop yield and quality are generally acceptable.

In view of the foregoing, it would be highly desirable to have an improved pesticide, which will serve as a more effective composition for irradicating weeds and weed seeds to facilitate increased plant proliferation. In addition, it would be highly advantageous to facilitate significantly, the early, as well as effective, irradication and control of weeds so that a much higher percentage of weeds can be killed. In this regard, such a product would be most effective for early and rapid weed and weed seed control, thereby facilitating early root establishment and nutrient uptake in desirable plants.

Such an improved pesticide and method of using it, would serve to control more quickly and effectively the proliferation of weeds competing for nourishment with the desired plants. With such a more rapid and effective weed controlling composition and method of using it, the desired plants can proliferate more readily, since it is important for the germination and establishment of plants to become properly nourished immediately with as little interference as possible from adverse influences, such as weeds.

It is recognized that many conventional fertilizers have been used satisfactorily for many different plants, as is well known in the trade. However, for some applications and in certain growing conditions, prior known fertilizers have not performed in an entirely satisfactory manner. In this regard, for a variety of reasons, the uptake by the plant of nutrients has not occurred in an entirely advantageous manner.

In order to illustrate the problem, it is well recognized by those skilled in the art that some crops, such as lettuce, are especially difficult to grow, or at least requires a great deal of attention by the grower. In the case of lettuce, it is very important that seed establishment and nutrient uptake occur very soon after planting, in view of the fragile nature of the plant. Early proliferation of the plant is especially important for the successful growing of a lettuce crop.

Usually, lettuce seeds are planted in beds which are arrayed in a parallel fashion across the lettuce field. In conventional applications, irrigation water and fertilizers may be applied onto the beds in a broadcast fashion. In some cases, the fertilizer may be applied by side dressing of the beds themselves. The fertilizer provides a source of nutrients for the plants, thereby encouraging and sustaining healthy growth.

Under suitable growing conditions, a lettuce field produces a substantial yield of healthy lettuce heads, of a preferred head size, such as a size 24 head. The leaves of the healthy plant are generally thin and flexible and cleave to the head in a desirable manner.

Because of the fragility of the lettuce plant, and the many factors which can adversely affect the growth of commercially suitable lettuce heads, the use of conventional fertilizers does not always achieve the desired result. In general, lettuce growers must exercise great care to prevent crop disease which may diminish production, or eliminate the lettuce yield completely. Disease as well as soil conditions can severely inhibit the uptake of conventional fertilizer, minerals and other elements essential to healthy plant proliferation.

A serious disease to which lettuce crops are susceptible, is a condition commonly known as "big vein." Such condition adversely affects the ability of the plant to assimilate nutrients in a healthy and vigorous manner. Thus, crop yield is limited, and the quality of the resulting lettuce is less than desirable. In this regard, the lettuce heads exhibit leathery leaves and are ill formed. The big vein condition can lead to reduced crop yields and to the production of lettuce heads with significantly reduced economic value, as a result of the diminished ability of the plant to assimilate proper nutrients, even when conventional fertilizers are applied.

In view of the foregoing, it would be highly desirable to have a fertilizer composition which would provide for early seed establishment and significantly increased nutrient uptake, even in the face of conditions, such as big vein, which inhibit significantly the ability of the plant to assimilate quickly desired nutrients. In this regard, it would be highly advantageous to facilitate greatly, the early uptake of fertilizer and other plant nutrients, to help proliferate healthy and vigorous plant growth, in substantially all growing conditions. In addition, it would be most desirable to have such a composition, which, in addition to its other characteristics, would be capable of promoting proliferation of plants, even in the face of serious problems, such as the big vein malady, inhibiting desired uptake or minerals and fertilizer components, as well as water. Such improved compositions should be applied by convenient and economical techniques.

US-A-4808215 discloses compositions comprising a water soluble polymer, an agrochemical and a surfactant.

US-A-4687505 discloses compositions containing anionic surfactants for use in desalination of salinic soils.

### Disclosure of Invention

It is an object of the present invention to provide a method for enhanced weed irradication, to help proliferate healthy and vigorous plant growth, even in growing conditions not completely advantageous to plant growth.

Another object of the present invention is to provide a method for early plant establishment in soils, in an effective and economical manner.

A still further object of the present invention to provide a method. for enhanced plant nutrient uptake, to help proliferate healthy and vigorous plant growth, even in growing conditions not advantageous to plant growth, enabling early plant establishment in soils, in an effective and economic manner.

Briefly, the above and further objects of the present invention are realized by providing an improved method to control rapidly the irradication of weeds and weed seeds, thereby enhancing desired plant proliferation and supporting a more efficient harvesting operation.

The pesticide includes a weed irradicating substance, and a desalination substance. A method of use includes irrigating the soil with water, prior to planting, to cause the germination of weed seeds, and thereafter applying a desalination agent to increase weed seed germination. An application of the inventive pesticide then causes a much larger number of weeds to be irradicated.

In one form of the invention, a surfactant is also employed to improve the speed of the effectiveness of the inventive composition in the weed irradication process.

The method of the present invention present several significant advantages and unexpected results. In the first place, the irradication of weeds and weed seeds in agricultural soils is substantially increased, thereby enabling the growth of more abundant and healthier crops. In addition, a more uniform plant distribution is achieved, thereby leading to a more efficient, and thus less costly, harvesting operation. Thus, because of the enhanced effectiveness of the pesticide and its method of use, substantial overall cost savings are realized.

Still further, in accordance with the present invention, there is provided a method to enhance plant nutrient uptake. The improved fertilizer includes nitrogenous nutrients, and a desalination ingredient. In one form of the invention, a surfactant is also employed to improve the speed of the increased nutrient uptake ability of the plants.

The composition and methods of the present invention present several significant advantages and unexpected results. In the first place, nutrient uptake is so greatly enhanced, even in the face of adverse growing conditions, enables plant to proliferate in a healthy and vigorous manner. Thus, the quality and quantity of the plants is improved.

Secondly, due to the enhanced effectiveness of the fertilizer, smaller quantities of the expensive nitrogenous nutrients need be employed, and thus an overall cost savings is realized. Also, it is highly desirable to reduce the amount of nitrogenous ingredients introduced to the soil, to have less of an adverse affect on the environment. In this regard, growers are being encouraged to reduce the amount of fertilizer applied to fields, because such products can enter underground water reservoirs used for drinking water, and the nitrogenous compounds can cause unwanted and undesirable bacteria proliferation.

### Best Mode for Carrying out the Invention

With regard to the novel pesticide composition, the composition, in use, produces unexpected results. The composition includes a weed and weed seed irradicating substance in combination with a soil desalination substance.

In a preferred form of the present invention, the inventive pesticide is as follows:
300.71 parts by volume VAPAM soil fumigant
1.752 parts by volume polymaleic acid
1.0 parts by volume surfactant
4.767 parts by volume water

In the preferred form of the invention, the first ingredient is in the form of a pesticidal composition, sold under the trademark VAPAM, registered in the United States by ICI Group Companies. The remaining three ingredients are in the form of a soil desalination composition sold under the trademark SPER SAL, registered in the United States by Sotac Corporation, having a place of business at El Centro, California.

The pesticide of the present invention may be used by soil injection techniques where the substance is injected into a prepared soil followed by watering. In addition, the pesticide may be distributed, together with water, through a sprinkler system or by means of field flood irrigation.

VAPAM is a water soluble liquid which, after application to agricultural soils is converted into a gaseous fumigant. The fumigant is effective in destroying weeds and weed seeds. After a suitable period of time, all of the VAPAM gas dissipates from the soil and the soil is ready for planting.

VAPAM is generally available in a liquid comprised of 32.7% sodium methyldithiocarbamate (anhydrous) and 67.3% inert ingredients. The pesticide is a water soluble liquid which, when applied in a conventional manner to agricultural soil, the liquid is converted into a gaseous fumigant. In time, the gas dissipates from the soil leaving the soil ready for planting. The product has utility in controlling and irradicating various weeds and their germinating weed seeds, unwanted grasses and, in addition, pests such as nematodes, centipedes and certain soilborne diseases, including root fungus. Thus, VAPAM has utility as a pesticide, fungicide, nematicide, insecticide and disease control agent.

The polymaleic acid is an anionic polymer having a molecular weight from about 300 to about 5,000; and the surfactant is triethanolaminedodecylbenzenesulfonate.

The surfactant, preferably an anionic surfactant, has a synergistic effect, producing unexpected results when used as disclosed herein. The surfactant is a surface active compound which is capable of lowering surface tension of an aqueous solution. In use, the surfactant spontaneously forms micelles, aggregates of a plurality of surfactant molecules generally having polar head groups on the outside and nonpolar tails buried on the inside. The micellar structure satisfies the solvation requirements of both the polar head groups, which are close to water, and the nonpolar tails which associate with each other on the inside of the micecelle. Thus, the surfactant helps to disperse the salt and in combination with the water, to facilitate micronutrient uptake into plants, thereby leading to early root establishment and increased plant yield.

The following example is given to aid in understanding the invention, but it is to be understood that the particular procedures, conditions or materials of the example are not intended as limitations of the present invention. As more particularly discussed below, use of the inventive composition resulted in a significantly increased irradication of weeds, improved crop yield, and a substantially more uniform crop plants of same size growth and develop as compared to a field untreated with the inventive composition.

### EXAMPLE 1

1 part by volume SPER SAL
40 parts by volume VAPAM.

The following experiment was conducted on an 18 acre ( 73x10³ square meters) field in Yuma, Arizona. The field was divided into a "treated" seven acre (28x10³ square meters) portion and an "untreated" 11acre(45x10³ square meters) portion. In both cases, identical procedures were employed with regard to the two fields, except, as discussed below, the treated field received the inventive composition. It had been noted in the past that the seven acres comprising the treated portion had never produced crops as well as the untreated 11 acre portion because of poor soil quality and soil salinity and wet ability problems.

In conducting the experiment, the following steps were performed.
1. Both fields were prepared for planting of cauliflower for seed production in double seed row bed configurations.
2. Both fields were watered in order to permit weed growth.
3. Six days after watering, the treated field only was irrigated with the inventive composition, comprising about 1 part SPER SAL to about 40 parts VAPAM, per acre. The untreated field was irrigated with VAPAM alone at the rate of 40 gallons per acre (3.7x10⁻² L per metre square). Trough application was utilized in both cases. After irrigation, it was noted that the planter beds of the treated field were completely wetted, as opposed to those of the untreated field which displayed significantly less wetting.
4. Weeds, predominantly nutgrass, a notoriously difficult weed to control, were cultivated in the beds in both the treated and the untreated fields. It was observed that weed control of approximately 75% to 80% was accomplished in the untreated field, while weed control in excess of 96% was observed in the treated field. In fact, a weeding crew was required to remove the weeds not killed from the untreated field, prior to planting.
5. Cauliflower seeds were planted in a double seed row bed configuration in the treated and the untreated fields.
6. Irrigation water was applied, at uniform rates, to both the treated and untreated fields.

It will be noted that the only difference in the methods utilized for the two fields was in step 3, where the inventive composition was applied to the treated field.

During the growth period of the cauliflower, it was observed that there was a greater percentage of cauliflower germination, with more visually observable uniform plant population, after approximately three weeks in the treated field as compared to the untreated field.

At harvest, there was an increased yield of approximately 30% per acre from the treated field, as compared to the untreated field. In fact, the seven acre ( 28x10³ square meters) treated field produced substantially as much cauliflower seed as the untreated 11 acres (45x10³ square meters). Thus, although the fields had been treated in a similar manner, throughout the experiment, with the single exception mentioned above, the yield from the field treated with the inventive composition was dramatically increased,

Another example of a method of using the inventive pesticide is to irrigate or otherwise apply SPER SAL to the field, following the germination of weed seeds. In this manner, an increased weed growth can be realized. In such cases, it is possible that a weed count of up to about 175 weeds per square foot (about 1885 weeds per square meter) could develop in a typical field, instead of only about 100 weeds per square foot (about 1080 weeds per square metre) which might be otherwise expected following the application of water only. Application of a substance such as VAPAM to the 175 weeds per square foot ( 1885 per square metre), at this point, weeds in a range which could vary from about 50% to 100%, depending art soil condition and other factors. In a given situation, such as in Example 1, assuming a weed kill rate of 80%, then the remaining 20% of the weeds, approximately 35 weeds per square foot (approximately 380 weeds per square meter), would produce a clearly unacceptable result, thereby rendering the soil unsuitable for some applications.

In a second example irrigation water and VAPAM are added to the soil, followed by an application of SPER SAL. In this case, the VAPAM would turn into a gas to fumigate the field. Approximately 80% of the weeds are killed. The field is then irrigated with SPER SAL and water. In this case, after the application of SPER SAL and water to the field, more weeds would be produced and the net result would be a case worse than the prior illustration.

However, by applying the inventive pesticide composition to the field, an overall weed kill rate of approximately 96% is realized. In this regard, only 7 weeds per square foot (75 weeds per square metre) would remain, as compared to the 35 weeds (380 weeds per square meter) surviving with the VAPAM treatment. Thus, the significant utility of the present invention is demonstrated.

In addition to VAPAM, other commercially available equivalents are suitable as constituents of the present inventive composition. It should be noted that the term "pesticide" is well understood in the agricultural industry to include, but not limited to, herbicides, fungicides, nematocides and insecticides.

With regard to the soil desalination constituent of the present invention, when the inventive pesticide is used in soils containing a build up of salts and/or alkaline components, the desalination substance in the form of an anionic low molecular weight polymeric compound and/or organophosphorus compounds inactivates or removes the salts and/or alkaline components to help plants proliferate. It has been found that the capability of such compositions for inactivating or removing salts and/or alkaline components in soil is enhanced by the addition of surfactant, having surface active characteristics, which enhance micronutrient uptake by newly established plants.

The anionic polymeric materials for use in the present composition include polymers, copolymers and sulfonated polymers, and copolymers of acrylic acid, methacrylic acid, hydrolyzed polymers and copolymers of maleic anhydride and substantially neutral water soluble salts of these compounds.

In addition to these compounds, organophosphorus agents having a utility in soil treating include phosphonic acids as hydroxyethylidene diphosphonic acid, aminitri (methylenephosphonic) acid and nitrilo trismethylene triphosphonic acid, phosphonic acids such as phosphynocarboxylic acid, and substantially neutral salts of these acids. In a preferred form of the invention, the anionic compound is selected from the formulas depicted in Table 3.

The present invention relates to a new use or method of making and using known compounds to achieve unexpected results. The compounds described above in detail are known to increase the solubility of sodium, potassium, calcium and magnesium salts by dispersing these salts so that an increased surface area is available to be wetted, thereby effectively shifting equilibrium from the solid phase to the dissolved liquid phase. It is believed that the precipitated salts are dispersed because the Helmholtz double layer model for dispersency is satisfied by the presence of the high negative charge densities of these compounds. Additionally, the precipitation of dissolved sodium, potassium, calcium and magnesium salts present in irrigation water is inhibited as soil dries. This is a result of crystal distortion effects at the surface of forming crystals. The net effect of both mechanisms (dispersency and crystal distortion) in soils is the removal of precipitated calcium salts from soil pore spaces.

The net effect of both mechanisms (dispersency and crystal distortion) in sodic alkaline soils is to provide excess calcium and magnesium cations to displace sodium from the colloidal clay surface resulting in sub-stoichiometrically induced cation exchange, facilitating the removal of sodium from the soil. The action of these compounds forces the mineral salts deep into the soil, or discharges them through field tile drains, resulting in an improved drainage and percolation rate, reduction of soil salts and/or alkalis, improvement in the ability of the crops to absorb water and increased germination and yield.

It is to be understood that the above proposed mechanism is advanced only as a possible assistance in understanding the invention and that patentability is based on the novelty and utility of the composition and methods and not on the correctness of the mechanism proposed.

In addition to the uses of VAPAM discussed above, the product has utility for control of soilborne pests that attack ornamental, food and fibre crops: weeds and germinating weed seeds such as Annual Bluegrass, Bermudagrass, Chickweed, Dandelion, Ragweed, Henbit, Watergrass, Johnsongrass, Nutgrass and the like. In addition, the substance is effective in control of nematodes, centipedes and soilborne diseases such as Rhizoctiona, Pythrum, Phytophthora, Varticillium and Sclerotinia. In addition, the composition has utility as a fungicide for controlling fungus and other unwanted conditions such as crop Club Root of crucifers.

Prior to use, the composition of the present invention may be prepared by several techniques. In one technique, the pesticide and SPER SAL are tank mixed, either by a grower in the field or by a manufacturer at bulk plants. In such cases a ratio of about 1 part SPER SAL to about 40 parts pesticide, by volume, is suitable. It has been found that the two major constituents of the present invention may be safely combined, in varying relative proportions without any noticeable chemical reaction between the two.

Several methods of application of the present invention are suitable. These methods include applying the composition in a broadcast technique, utilizing a sprinkler system, utilizing flood irrigation and, in some applications by injecting the composition by side dressing into preformed plant beds and by means of drip irrigation systems, according to the manufacturer's label and recommendations and directions for use. In general, it is advisable to prepare the plant bed prior to application by breaking up soil clumps and by appropriate leveling and seeded bed preparation. Of course, it will be recognized that the inventive composition may be utilized for the treatment of plant beds after harvest to irradicate any crop left in the field after the harvesting operation has been completed.

In place of VAPAM in the inventive composition, the following substances can be used:
KERB, manufactured by Rhom & Haas, Philadelphia, Pennsylvania.
BALAN and TREFLAN, each manufactured by Elanco Products Company.
EPTAM, manufactured by ICI Americas, Wilmington, Delaware.
KERB is a water soluble pesticide, having broad applications for weed irradication. It comprises Pronamide 3, 5, dicloro-N-(1), 1-dimethyl-2 (propynyl)-benzamide as the active ingredient (50%) combined with 50% inert ingredients. While the composition has significant utility in weed irradication, it also kills desirable plants. When KERB replaces VAPAM in the inventive composition, use of the composition results in improved weed irradication with a reduction in the phytotoxic effect sometimes seen when KERB alone applied, in high temperature conditions, to soils high in salt levels.
BALAN is a selective herbicide generally utilized for the preemergence control of annular grasses and broad leaf weeds. It has, as an active ingredient, N-butyl-N-ethyl-a, a, a trifluro-2, 6 dinitro-p-toluidine, 60%, combined with inert ingredients 40%. BALAN and TREFLAN are manufactured by Elanco Products Company. When BALAN and TREFLAN are combined with SPER SAL in the inventive composition, soil penetration is increased and a more effective weed irradication is realized than when BALAN or TREFLAN is used alone.
EPTAN, when utilized in place of VAPAM in the inventive composition, results in a pesticide having significantly improved soil diffusion characteristics than that observed in EPTAN when used alone.

In accordance with the present invention, soil in which salts and/or alkaline components have built up, either from irrigation water or from natural causes, is treated with a composition including an anionic low molecular weight polymeric compound and/or organophosphorus compounds and a fertilizer to inactivate or remove the salts and/or alkaline components to increase crop yields. Crop yields are increased because the inventive composition permits plants to assimilate fertilizer better, leading to increased rate of micronutrient uptake and early plant establishment. Not only does use of the inventive composition result in increased crop yields, a concomitant reduction in the amount of fertilizer and water necessary to produce a superior crop. Thus, the present invention confers a significant economic benefit on the user. In addition, an environmental benefit is conferred because of the reduction of fertilizer necessary for good crop growth. It is well known that certain fertilizer constituents, such as phosphates, can lead to unwanted growth of algae if these constituents enter the ground water. Thus, by reducing amounts of fertilizers necessary, the likelihood of such unwanted growth is diminished.

It has been found that the capability of the present invention for inactivating or removing salts and/or alkaline components in soil is enhanced by the addition of surfactant, having surface active characteristics, which enhance micronutrient uptake by newly established plants.

The anionic polymeric materials for use in the present composition include polymers, copolymers and sulfonated polymers, and copolymers of acrylic acid, methacrylic acid, hydrolyzed polymers and copolymers of maleic anhydride and substantially neutral water soluble salts of these compounds.

In addition to these compounds, organophosphorus agents having a utility in soil treating include phosphonic acids as hydroxyethylidene diphosphonic acid, aminitri (methylenephosphonic) acid and nitrilo trismethylene triphosphonic acid, phosphonic acids such as phosphynocarboxylic acid, and substantially neutral salts of these acids. In a preferred embodiment, the anionic compound is selected from the formulas depicted in FIG. 6.

In addition to the compounds discussed above, other suitable compounds, more particularly disclosed in U.S. patent 4,923,500, incorporated herein by reference, are suitable.

The present invention relates to a new use or method of making and using known compounds to achieve unexpected results. The compounds described above in detail are known to increase the solubility of sodium, potassium, calcium and magnesium salts by dispersing these salts so that an increased surface area is available to be wetted, thereby effectively shifting equilibrium from the solid phase to the dissolved liquid phase. It is believed that the precipitated salts are dispersed because the Helmholtz double layer model for dispersency is satisfied by the presence of the high negative charge densities of these compounds. Additionally, the precipitation of dissolved sodium, potassium, calcium and magnesium salts present in irrigation water is inhibited as soil dries. This is a result of crystal distortion effects at the surface of forming crystals. The net effect of both mechanisms (dispersency and crystal distortion) in soils is the removal of precipitated calcium salts from soil pore spaces.

The net effect of both mechanisms (dispersency and crystal distortion) in sodic alkaline soils is to provide excess calcium and magnesium cations to displace sodium from the colloidal clay surface resulting in substoichiometrically induced cation exchange, facilitating the removal of sodium from the soil. The action of these compounds forces the mineral salts deep into the soil, or discharges them through field tile drains, resulting in an improved drainage and percolation rate, reduction of soil salts and/or alkalis, improvement in the ability of the crops to absorb water and increased germination and yield.

It is to be understood that the above proposed mechanism is advanced only as a possible assistance in understanding the invention and that patentability is based on the novelty and utility of the composition and methods and not on the correctness of the mechanism proposed.

In a preferred form of the present invention, the inventive composition includes a polymoleic anhydride sold under the trademark SPER SAL®. SPER SAL is a registered trademark owned by Sotac Corporation, El Centro, California. SPER SAL is an aqueous desalinating solution as follows:
- polymaleic acid: 23.3% by weight
- surfactant: 13.3% by weight
- water: 63.4% by weight
wherein the polymoleic acid is an anionic polymer having a molecular weight from about 300 to about 5,000; and the surfactant is triethanolaminedodecylbenzenesulfonate.

The functions of the polymoleic acid have been described above. The surfactant, preferably an anionic surfactant is a surface active compound which is capable of lowering surface tension of an aqueous solution. In use, the surfactant spontaneously forms micelles, aggregates of a plurality of surfactant molecules generally having polar head groups on the outside and nonpolar tails buried on the inside. The micellar structure satisfies the solvation requirements of both the polar head groups, which are close to water, and the nonpolar tails which associate with each other on the inside of the micecelle. Thus, the surfactant helps to disperse the salt and in combination with the water, to facilitate micronutrient uptake onto plants, thereby leading to early root establishment and increased plant yield.

Another constituent of the present invention is a commercially available fertilizer. It has been found, for example, that An20, a commercially available fertilizer, is suitable. This fertilizer includes approximately 20% nitrogen (N) by weight, in an aqueous solution of ammonium nitrate (NH₄NO3).

It has been found that another fertilizer, known as 10-34-0, is also suitable. This fertilizer is, by weight about 10% nitrogen (N), 34% phosphate (P₂O₅) 0% potash (K₂O) in an aqueous solution of ammonium phosphate.

Prior to use, the composition of the present invention may be prepared by several techniques. In one technique, dry fertilizer, in granular form, is sprayed with an aqueous solution of SPER SAL, and tumbled until dry. After the water in the SPER SAL has evaporated, the polymoleic acid and surfactant adsorb onto the surface of the fertilizer, without any chemical reaction between the fertilizer and the other two constituents.

In another technique, a liquid fertilizers and SPER SAL are tank mixed, either by the grower in the field or by the fertilizer manufacturer at bulk plants. In such cases, a ratio of about 1 part SPER SAL to about 720 parts fertilizer, by weight, is suitable.

Several methods of application of the present invention have been found to be suitable. These methods include broadcasting the improved fertilizer in its dry condition, broadcasting the fertilizer in a liquid state, applying the liquid fertilizer with the seed, applying dry fertilizer with the seed, and banding the fertilizer on top of the seed bed. In some applications, especially in the growing of lettuce, it has been found that side dressing, by injecting either liquid or dry fertilizer into the lettuce bed, is highly suitable for promoting rapid micronutrient uptake into the plants root system.

The following examples are given to aid in understanding the invention, but it is to be understood that the particular procedures, conditions or materials of the examples are not intended as limitations of the present invention. In each of the following examples, there was noted an improved yield and a more vigorous root system in the treated soil, as compared to the untreated soil.

### EXAMPLE 2

1 part by weight SPER SAL
216 parts by weight 10-34-0 liquid fertilizer

The following experiment was conducted on a 36 acre field in Bard Valley, California. As indicated below, the entire field was treated with aqueous solutions of SPER SAL and the fertilizer 10-34-0. Subsequently, the entire field, with the exception of approximately 5 acres ( 20x10³ square metres), was treated with the invention fertilizer of the present invention. The 5 acres (20x10³ square metres) was substantially rectangular in shape and extended across the lettuce field, having treated portions of the field on both sides.

In conducting the experiment, the following steps were performed.
1. SPER SAL, at the rate of the of 1 pint per acre (1.2x10⁻⁴ L per square meter), in combination with 10-34-0 liquid fertilizer, was injected in the lettuce beds prior to planting, utilizing injection knives attached to a bed shaper.
2. After bed shaping, the field was irrigated for 26 hours.
3. Approximately two weeks after irrigation, Merit 3186 seed was planted and the beds were sprinkle irrigated for 48 hours. The irrigation water contained SPER SAL which was delivered to the entire field at the rate of 1 1/2 gallons per acre (1.4x10⁻³ L per square meter).
4. The "treated" portion of the field was fertilized, utilizing side dress techniques, with the inventive composition in the ratio of one part SPER SAL to 216 parts of 10-34-0 fertilizer.

Two weeks after planting, it was observed that the lettuce plants in the treated portion of the field, as compared to the plants in the untreated portion, were approximately 20 percent larger in size and had approximately a 20 percent greater root system. In addition, a noticeable increase in head size and excellent quality of product was evident in the treated portion.

The disclosure of the present invention is not limited to the rates of application stated in Example 2. On the contrary, SPER SAL rates of about .5 to about 8.0 parts by weight to about 40 to about 480 parts by weight of 10-34-0 fertilizer, and other commercially available fertilizers, are suitable.

### EXAMPLE 3

1 part by weight SPER SAL
720 parts by weight An20 liquid fertilizer

In this experiment, a lettuce field of approximately 69 acres in Yuma Valley, Arizona was utilized. In this case, the entire field was treated with SPER SAL and with An20 liquid fertilizer. In addition, the entire field with the exception of a rectangular portion in 48 beds, the "untreated" portion, was treated with the fertilizer of the present invention. The experiment was conducted as follows:
1. SPER SAL, in the ratio of 1 part to 720 parts of liquid An20 fertilizer was injected into each side of the lettuce beds utilizing side dress knives (48 beds were untreated with SPER SAL but treated with 90 gallons per acre (8.4x10⁻² L per square meter) of An20 fertilizer.
2. Honcho II head lettuce was planted in both treated and untreated portions of the field.
3. After planting, irrigation germ water, containing SPER SAL, was sprinkle irrigated at the rate of 1 1/2 gallons per square (1.4x10⁻³ L per square metre) for 48 hours.

The entire field developed the Big Vein disease which, as is known, can result in total crop loss. However, the treated portions of the field showed a yield increase of 10 percent more cuttable heads and an increase of 20 percent more 24 head size lettuce than that experienced in the untreated portion of the field. It was also noted that a larger mass of roots developed in the treated portion than in the untreated portion. In addition, visual observation disclosed that the lettuce plants head formation was more pronounced and appeared substantially mare normal in the treated portion of the field.

The lettuce produced in both the untreated and treated portions of the field were subjected to laboratory analysis. Petiole analysis indicated a greater uptake of nutrients in the lettuce from the treated portion of the field.

For example, Table 1 illustrates nutrient analyses of lettuce derived from the untreated portion of the field of Example 3.

**TABLE 1**

| ELEMENT | ANALYTICAL RESULTS |
|---|---|
| NO₃N | 7374 ppm |
| PO4 | 2552 ppm |
| (%) K | 4.6% |
| Mn | 62 ppm |
| Fe | 106 ppm |
| B | 50 ppm |
| Cu | 3.04 ppm |
| Zn | 29 ppm |

In both cases, nitrate and phosphate uptake was measured and, in addition, measurements of elemental potassium, manganese, iron, boron, copper and zinc were made.

Similar analyses were conducted with regard to the lettuce produced from the treated portion of the field. The results obtained are depicted in Table 2.

**TABLE 2**

| ELEMENT | ANALYTICAL RESULTS | INCREASE |
|---|---|---|
| NO₃N | 7912 ppm | 7.3% |
| PO4 | 2428 ppm | -4.7% |
| (%) K | 6.1% | 33% |
| Mn | 75 ppm | 2.1% |
| Fe | 144 ppm | 36% |
| B | 45 ppm | -10% |
| Cu | 4.32 ppm | 42.1% |
| Zn | 34 ppm | 17.2% |

As indicated by the increase of incorporation of nutrients depicted in Table 2, the treated portion of the field produced a significantly improved results. Further, the reduction in phosphates indicate that an abundance of the substance was present in the soil prior to planting because of prior phosphate fertilization of the field. The reduction in boron is an advantage since it is well known that the substance is toxic to plant.

In addition to the specific rates of application in Example 3, ratios of about 1 to about 8 parts of SPER SAL to about 80 to about 800 parts fertilizer or other commercially available fertilizer is suitable.

While particular embodiments of the present invention have been disclosed, it is to be understood that various different modifications are possible and are contemplated within the true spirit and scope of the appended claims. There is no intention, therefore, of limitations to the exact abstract or disclosure herein presented.

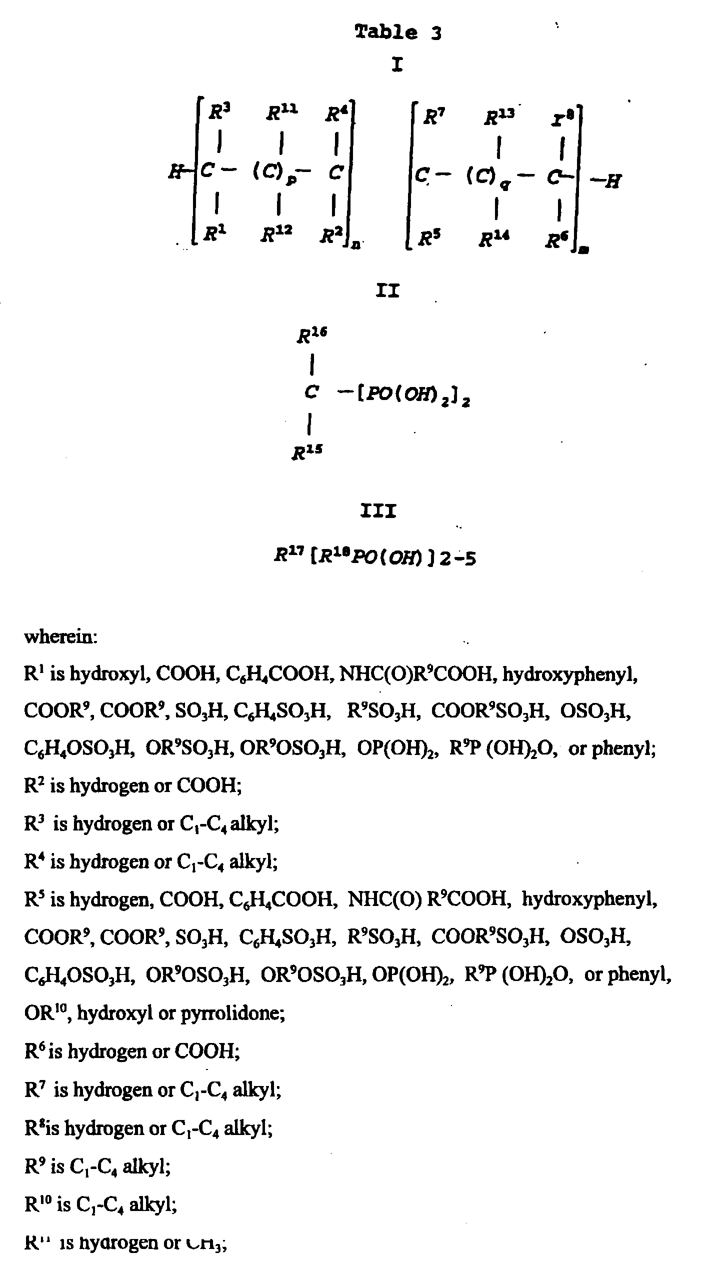

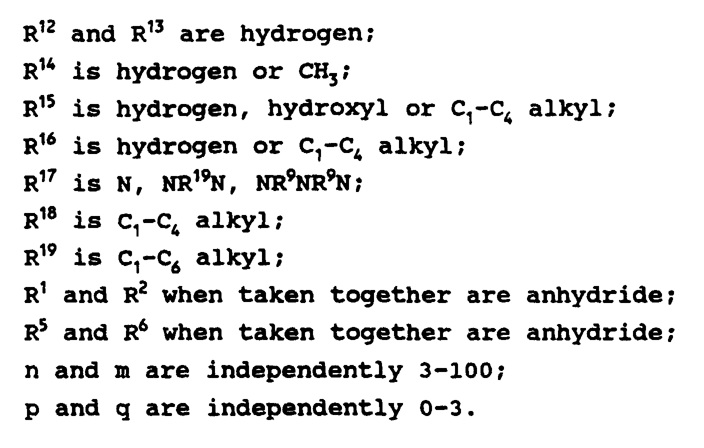

## Claims

1. A method for destroying unwanted organisms in agricultural soils which comprises applying to agricultural soils a pre-emergent pesticide in a quantity sufficient to destroy the organisms and applying a desalinating substance in quantity sufficient to reduce the salinity of the soil said soil desalinating substance having the formulae I, II or III: 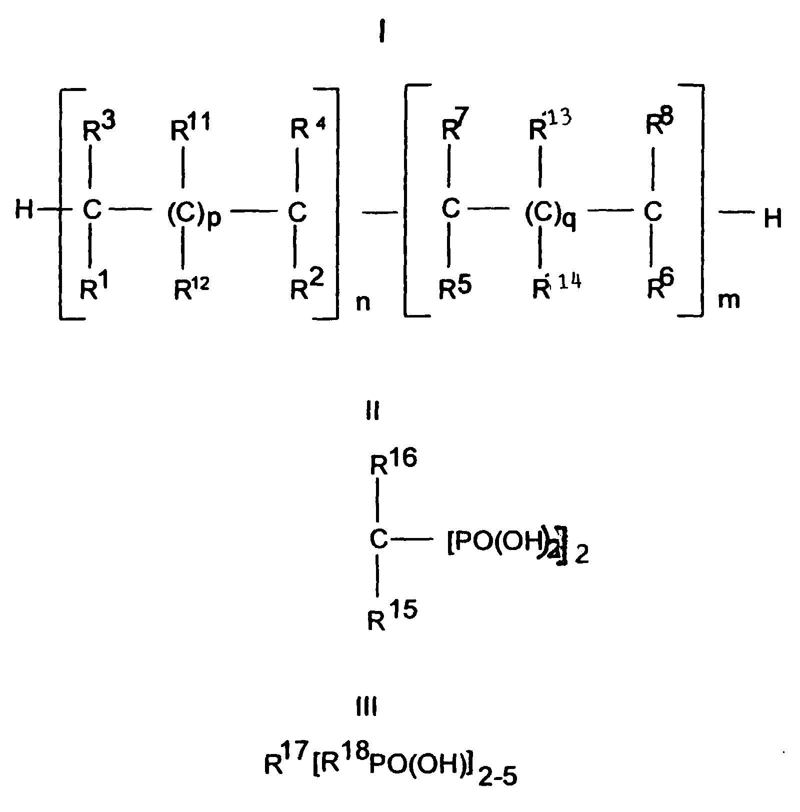 wherein
the compounds of formula I have a molecular weight of from 300 to 5000 and R¹ is hydroxyl, COOH, C₆H₄ COOH, NHC(O)R⁹COOH, hydroxyphenyl, COOR⁹, SO₃H, C₆H₄SO₃H, R⁹SO₃H, COOR⁹SO₃H, OSO₃H, C₆H₄OSO₃H, OR⁹SO₃H, OR⁹OSO₃HOP(OH)₂ R⁹P(OH)₂O, or phenyl;
R² is hydrogen or COOH;
R³ is hydrogen or C₁-C₄ alkyl;
R⁴ is hydrogen or C₁-C₄ alkyl;
R⁵ if hydrogen, COOH, C₆H₄COOH, NHC (O)R⁹ COOH, hydroxyphenyl, COOR⁹, SO₃H, C₆H₄SO₃H, R⁹SO₃H, COOR⁹SO₃H, HOSO₃H, C₆H₄OSO₃H, OR⁹SO₃H, OR⁹OSO₃H, OP(OH)₂, R⁹P(OH)₂O, phenyl, OR¹⁰, hydroxyl or pyrrolidonyl;
R⁶ is hydrogen or COOH;
R⁷ is hydrogen of C₁-C₄alkyl;
R⁸ is hydrogen or C₁-C₄ alkyl;
R⁹ is C₁-C₄ alkyl or alkylene;
R¹⁰ is C₁-C₄ alkyl
R¹¹ is hydrogen or CH₃;
R¹² and R¹³ are hydrogen;
R¹⁴ is hydrogen or CH₃;
R¹⁵ is hydrogen, hydroxyl or C₁-C₄ alkyl;
R¹⁶ is hydrogen or C₁-C₄ alkyl;
R¹⁷ is N, NR¹⁹N or NR⁹NR⁹N;
R¹⁸ is C₁-C₄ alkyl;
R¹⁹ is C₁-C₄ alkyl;
R¹ and R² when taken together are anhydride;
R⁵ and R⁶ when taken together are anhydride;
n and m are independently 3-100; and
p and q are independently 0-3,
and said pesticide being selected from the group comprising pronamide, benfluralin, trifluoralin, S-ethyldipropylthiocarbamate and sodium methyldithocarbamate.

2. A method for eradicating weeds in agricultural soils which comprises the steps of (i) irrigating the soil with water in a sufficient quantity to germinate weed seeds and (ii) applying an agricultural desalination agent to the soil to increase weed seed germination said desalination agent being a compound having the formulae I, II or III. 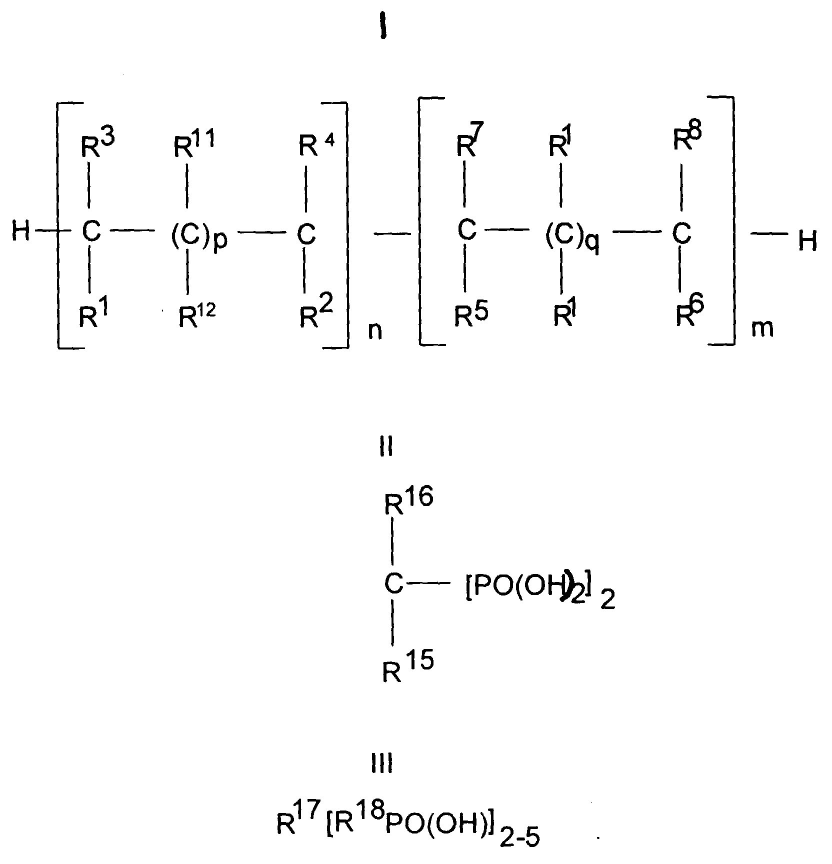 wherein
the compounds of formula I have a molecular weight of from 300 to 5000 and R¹ is hydroxyl, COOH, C₆H₅ COOH, NHC(O)R⁹COOH, hydroxyphenyl, COOR⁹, SO₃H, C₆H₅SO₃H, R⁹SO₃H, COOR⁹SO₃H, OSO₃H, C₆H₅OSO₃H, OR⁹SO₃H, OR⁹OSO₃HOP(OH)₂ R⁹P(OH)₂O, or phenyl;
R² is hydrogen or COOH;
R³ is hydrogen or C₁-C₄ alkyl;
R⁴ is hydrogen or C₁-C₄ alkyl;
R⁵ if hydrogen, COOH, C₆H₅COOH, NHC (O)R⁹ COOH, hydroxyphenyl, COOR⁹, SO₃H, C₆H₅SO₃H, R⁹SO₃H, COOR⁹SO₃H, HOSO₃H, C₆H₅OSO₃H, OR⁹SO₃H, OR⁹OSO₃H, OP(OH)₂, R⁹P(OH)₂O, phenyl, OR¹⁰, hydroxyl or pyrrolidonyl;
R⁶ is hydrogen or COOH;
R⁷ is hydrogen of C₁-C₄alkyl;
R⁸ is hydrogen or C₁-C₄ alkyl;
R⁹ is C₁-C₄ alkyl or alkylene;
R¹⁰ is C₁-C₄ alkyl
R¹¹ is hydrogen or CH₃;
R¹² and R¹³ are hydrogen;
R¹⁴ is hydrogen or CH₃;
R¹⁵ is hydrogen, hydroxyl or C₁-C₄ alkyl;
R¹⁶ is hydrogen or C₁-C₄ alkyl;
R¹⁷ is N, NR¹⁹N or NR⁹NR⁹N;
R¹⁸ is C₁-C₄ alkyl;
R¹⁹ is C₁-C₄ alkyl;
R¹ and R² when taken together are anhydride;
R⁵ and R⁶ when taken together are anhydride;
n and m are independently 3-100; and
p and q are independently 0-3,
and said pesticide being selected from the group comprising pronamide, benfluralin, trifluoralin, and sodium methyldithiocarbamate
and (iii) applying to the soil a pre-emergent herbicide said herbicide being selected from the group comprising pronamide, benfluralin, trifluoralin, S-ethyldipropylthiocarbamate and sodium methyldithiocarbamate.

3. A method according to either of the preceding claims characterised in that said pesticide is a sodium methyldithiocarbamate.

4. A method according to any of the preceding claims characterised in that a surfactant is applied to the soil in admixture with the desalination agent.

5. A method according to claim 4 characterised in that said surfactant is triethanolaminedodecylbenzenesulfonate.

6. A method according to claim 5 characterised in that an aqueous solution of 23.3% polymaleic acid, 13.3%, triethanolaminedodecylbenzenesulfonate and 63.4% water is applied to the soil.

7. A method according to any of the preceding claims characterised in that a nitrogen and phosphate containing fertiliser is applied to the soil.

8. A method according to claim 7 characterised in that the ratio of nitrogen to phosphate in said fertiliser is between 3:1 and 4:1.

9. A method according to either of claims 7 or 8 characterised in that 20% nitrogen in an aqueous solution of ammonium nitrate is applied to the soil.

10. A method according to any of claim 7 to 9 characterised in that the ratio of said soil desalination substance to said fertiliser is between 1 to 216 and 1 to 720.

## Patentansprüche

1. Verfahren zum Zerstören unerwünschter Organismen in Ackerböden, welches das Aufbringen auf Ackerböden eines Vorlaufpestizids in einer Menge umfasst, die zum Zerstören der Organismen ausreicht, und Aufbringen einer Entsalzungssubstanz in einer Menge, die ausreicht, um die Salinität des Bodens zu reduzieren, wobei die genannte Bodenentsalzungssubstanz die Formeln I, II oder III aufweist: 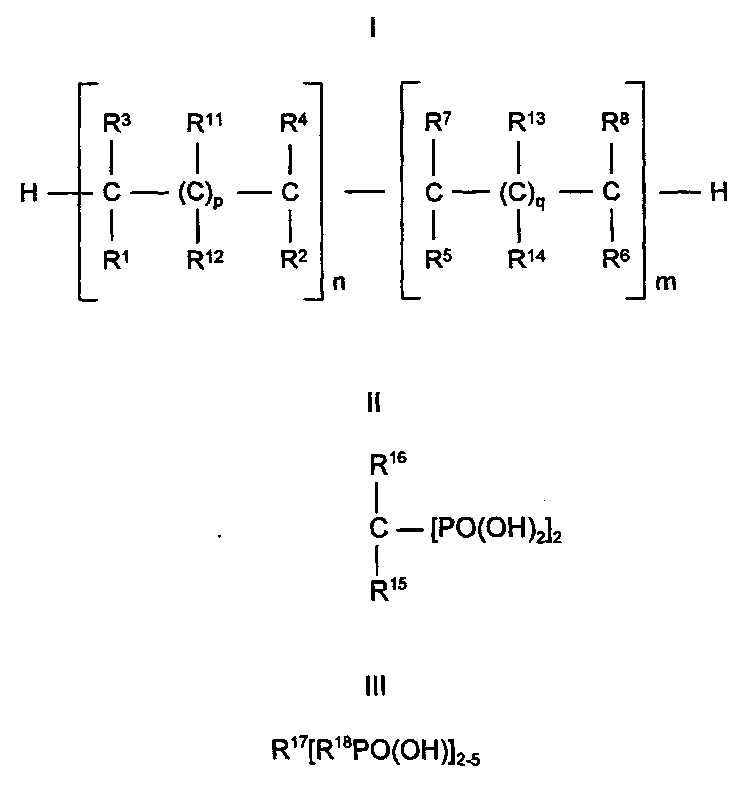 worin
die Verbindungen von Formel I ein Molekulargewicht von 300 bis 5000 aufweisen und R¹ Hydroxyl, COOH, C₆H₄COOH, NHC (O) R⁹COOH, Hydroxyphenyl, COOR⁹, SO₃H, C₆H₄SO₃H, R⁹SO₃H, COOR⁹SO₃H, OSO₃H, C₆H₄OSO₃H, OR⁹SO₃H, OR⁹OSO₃H, OP(OH)₂,
R⁹P(OH)₂O oder Phenyl ist;
R² Wasserstoff oder COOH ist;
R³ Wasserstoff oder C₁-C₄-Alkyl ist;
R⁴ Wasserstoff oder C₁-C₄-Alkyl ist;
R⁵ Wasserstoff, COOH, C₆H₄COOH, NHC(O)R⁹COOH, Hydroxyphenyl, COOR⁹, SO₃H, C₆H₄SO₃H, R⁹SO₃H, COOR⁹SO₃H, HOSO₃H, C₆H₄OSO₃H, OR⁹SO₃H, OR⁹OSO₃H, OP(OH)₂, R⁹P (OH) ₂O, Phenyl, OR¹⁰, Hydroxyl oder Pyrrolidonyl ist;
R⁶ Wasserstoff oder COOH ist;
R⁷ Wasserstoff oder C₁-C₄-Alkyl ist;
R⁸ Wasserstoff oder C₁-C₄-Alkyl ist;
R⁹ C₁-C₄-Alkyl oder Alkylen ist;
R¹⁰ C₁-C₄-Alkyl ist;
R¹¹ Wasserstoff oder CH₃ ist;
R¹² und R¹³ Wasserstoff sind;
R¹⁴ Wasserstoff oder CH₃ ist;
R¹⁵ Wasserstoff, Hydroxyl oder C₁-C₄-Alkyl ist;
R¹⁶ Wasserstoff oder C₁-C₄-Alkyl ist;
R¹⁷ N, NR¹⁹N oder NR⁹NR⁹N ist;
R¹⁸ C₁-C₄-Alkyl ist;
R¹⁹ C₁-C₄-Alkyl ist;
R¹ und R², wenn zusammengenommen, Anhydrid sind;
R⁵ und R⁶, wenn zusammengenommen, Anhydrid sind;
n und m unabhängig 3-100 sind; und
p und q unabhängig 0-3 sind
und genanntes Pestizid aus der Gruppe ausgewählt wird, die Pronamid, Benfluralin, Trifluralin, S-Ethyldipropylthiocarbamat und Natriummethyldithiocarbamat umfasst.

2. Verfahren zum Ausrotten von Unkräutern in Ackerböden, welches die folgenden Schritte umfasst: (i) Irrigieren des Bodens mit Wasser in einer ausreichenden Menge zum Keimen von Unkrautsamen und (ii) Aufbringen eines landwirtschaftlichen Entsalzungsmittels auf den Boden zur Verstärkung der Unkrautsamenkeimung, wobei genanntes Entsalzungsmittel eine Verbindung ist, welche die Formeln I, II oder III aufweist. 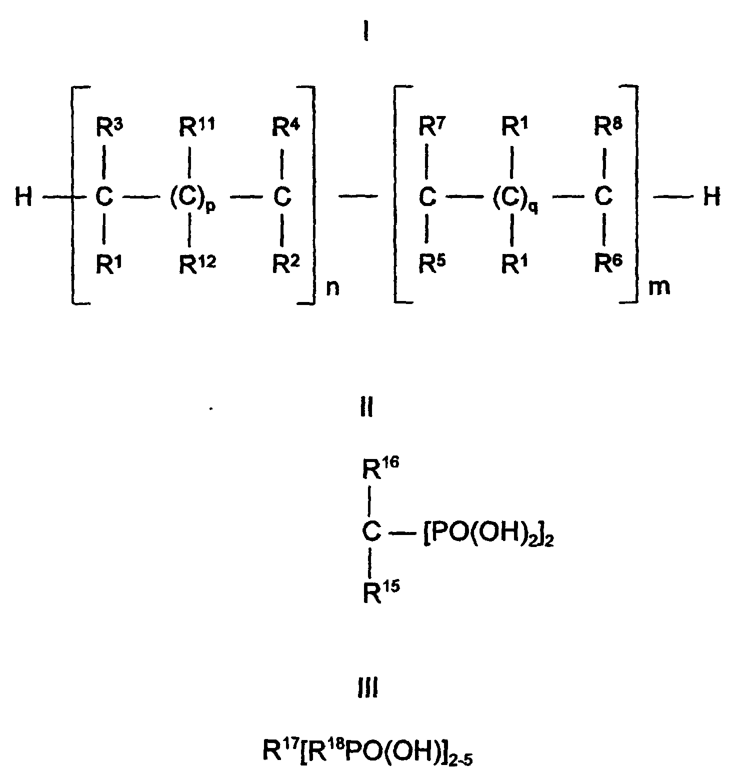 worin
die Verbindungen von Formel I ein Molekulargewicht von 300 bis 5000 aufweisen und R¹ Hydroxyl, COOH, C₆H₅COOH, NHC(O) R⁹COOH, Hydroxyphenyl, COOR⁹, SO₃H, C₆H₅SO₃H, R⁹SO³H, COOR⁹SO₃H, OSO₃H, C₆H₅OSO₃H, OR⁹SO₃H, OR⁹OSO₃H, OP (OH) ₂, R⁹P(OH)₂O oder Phenyl ist;
R² Wasserstoff oder COOH ist;
R³ Wasserstoff oder C₁-C₄-Alkyl ist;
R⁴ Wasserstoff oder C₁-C₄-Alkyl ist;
R⁵ Wasserstoff, COOH, C₆H₅COOH, NHC(O)R⁹COOH, Hydroxyphenyl, COOR⁹, SO₃H, C₆H₅SO₃H, R⁹SO₃H, COOR⁹SO₃H, HOSO₃H, C₆H₅OSO₃H, OR⁹SO₃H, OR⁹OSO₃H, OP(OH)₂, R⁹P (OH)₂O, Phenyl, OR¹⁰, Hydroxyl oder Pyrrolidonyl ist;
R⁶ Wasserstoff oder COOH ist;
R⁷ Wasserstoff oder C₁-C₄-Alkyl ist;
R⁸ Wasserstoff oder C₁-C₄-Alkyl ist;
R⁹ C₁-C₄-Alkyl oder Alkylen ist;
R¹⁰ C₁-C₄-Alkyl ist;
R¹¹ Wasserstoff oder CH₃ ist;
R¹² und R¹³ Wasserstoff sind;
R¹⁴ Wasserstoff oder CH₃ ist;
R¹⁵ Wasserstoff, Hydroxyl oder C₁-C₄-Alkyl ist;
R¹⁶ Wasserstoff oder C₁-C₄-Alkyl ist;
R¹⁷ N, NR¹⁹N oder NR⁹NR⁹N ist;
R¹⁸ C₁-C₄-Alkyl ist;
R¹⁹ C₁-C₄-Alkyl ist;
R¹ und R², wenn zusammengenommen, Anhydrid sind;
R⁵ und R⁶, wenn zusammengenommen, Anhydrid sind;
n und m unabhängig 3-100 sind; und
p und q unabhängig 0-3 sind
und genanntes Pestizid aus der Gruppe ausgewählt wird, die Pronamid, Benfluralin, Trifluralin, S-Ethyldipropylthiocarbamat und Natriummethyldithiocarbamat umfasst, und (iii) Aufbringen auf den Boden eines Vorlaufherbizids, wobei genanntes Herbizid aus der Gruppe ausgewählt wird, die Pronamid, Benfluralin, Trifluralin, S-Ethyldipropylthiocarbamat und Natriummethyldithiocarbamat umfasst.

3. Verfahren nach einem der vorangehenden Ansprüche, dadurch gekennzeichnet, dass genanntes Pestizid ein Natriummethyldithiocarbamat ist.

4. Verfahren nach einem der vorangehenden Ansprüche, dadurch gekennzeichnet, dass ein oberflächenaktives Mittel in Beimischung mit dem Entsalzungsmittel auf den Boden aufgebracht wird.

5. Verfahren nach Anspruch 4, dadurch gekennzeichnet, dass genanntes oberflächenaktives Mittel Triethanolamindodecylbenzensulfonat ist.

6. Verfahren nach Anspruch 5, dadurch gekennzeichnet, dass eine wässrige Lösung aus 23,3% Polymaleinsäure, 13,3% Triethanolamindodecylbenzensulfonat und 63,4% Wasser auf den Boden aufgebracht wird.

7. Verfahren nach einem der vorangehenden Ansprüche, dadurch gekennzeichnet, dass ein Stickstoff und Phosphat enthaltendes Düngemittel auf den Boden aufgebracht wird.

8. Verfahren nach Anspruch 7, dadurch gekennzeichnet, dass das Verhältnis von Stickstoff zu Phosphat in genanntem Düngemittel zwischen 3:1 und 4:1 liegt.

9. Verfahren nach einem der Ansprüche 7 oder 8, dadurch gekennzeichnet, dass 20% Stickstoff in einer wässrigen Lösung aus Ammoniumnitrat auf den Boden aufgebracht werden.

10. Verfahren nach einem der Ansprüche 7 bis 9, dadurch gekennzeichnet, dass das Verhältnis von genannter Bodenentsalzungssubstanz zu genanntem Düngemittel zwischen 1 bis 216 und 1 bis 720 liegt.

## Revendications

1. Méthode pour détruire des organismes non désirés dans des sols agricoles qui comprend appliquer aux sols agricoles un pesticide de pré-germination en une quantité suffisante pour détruire les organismes et appliquer une substance dessalante en quantité suffisante pour réduire la salinité du sol, ladite substance dessalante ayant la formule I, II ou III : 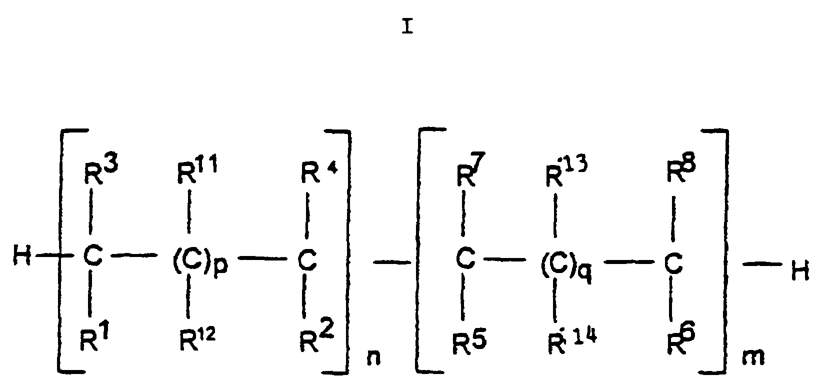 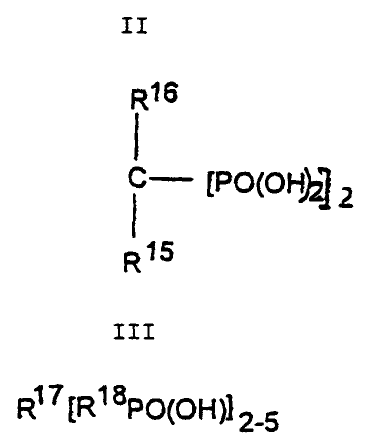 dans laquelle
les composés de la formule I ont un poids moléculaire de 300 à 5000 et R¹ est un hydroxyle, COOH, C₆H₄COOH, NHC(O)R⁹COOH, un hydroxyphényle, COOR⁹, SO₃H, C₆H₄SO₃H, R⁹SO₃H, COOR⁹SO₃H, OSO₃H, C₆H₄OSO₃H, OR⁹SO₃H, OR⁹OSO₃H, OP(OH)₂, R⁹P(OH)₂O, ou un phényle;
R² est un hydrogène ou COOH;
R³ est un hydrogène ou un alkyle C₁-C₄;
R⁴ est un hydrogène ou un alkyle C₁-C₄;
R⁵ est un hydrogène, COOH, C₆H₄COOH, NHC(O)R⁹COOH, un hydroxyphényle, COOR⁹, SO₃H, C₆H₄SO₃H, R⁹SO₃H, COOR⁹SO₃H, HOSO₃H, C₆H₄OSO₃H, OR⁹SO₃H, OR⁹OSO₃H, OP(OH)₂, R⁹P(OH)₂O, un phényle, OR¹⁰, un hydroxyle ou un pyrrolidonyle;
R⁶ est un hydrogène ou COOH;
R⁷ est un hydrogène ou un alkyle C₁-C₄;
R⁸ est un hydrogène ou un alkyle C₁-C₄;
R⁹ est un alkyle C₁-C₄ ou un alkylène;
R¹⁰ est un alkyle C₁-C₄;
R¹¹ est un hydrogène ou CH₃;
R¹² et R¹³ sont un hydrogène;
R¹⁴ est un hydrogène ou CH₃;
R¹⁵ est un hydrogène, un hydroxyle ou un alkyle C₁-C₄;
R¹⁶ est un hydrogène ou un alkyle C₁-C₄;
R¹⁷ est N, NR¹⁹N ou NR⁹NR⁹N;
R¹⁸ est un alkyle C₁-C₄;
R¹⁹ est un alkyle C₁-C₄;
R¹ et R² lorsque pris ensemble sont un anhydride;
R⁵ et R⁶ lorsque pris ensemble sont un anhydride;
n et m sont indépendamment 3-100; et
p et q sont indépendamment 0-3,
et ledit pesticide étant sélectionné à partir du groupe comprenant le propyzamide, la benfluraline, la trifluraline, le S-éthyldipropylthiocarbarmate et le méthyldithiocarbamate de sodium.

2. Méthode pour détruire des mauvaises herbes dans des sols agricoles qui comprend les étapes consistant à (i) irriguer le sol avec de l'eau en une quantité suffisante pour faire germer les graines de mauvaises herbes et (ii) appliquer un agent de dessalement agricole au sol pour augmenter la germination des graines de mauvaises herbes, ledit agent de dessalement étant un composé ayant la formule I, II ou III. 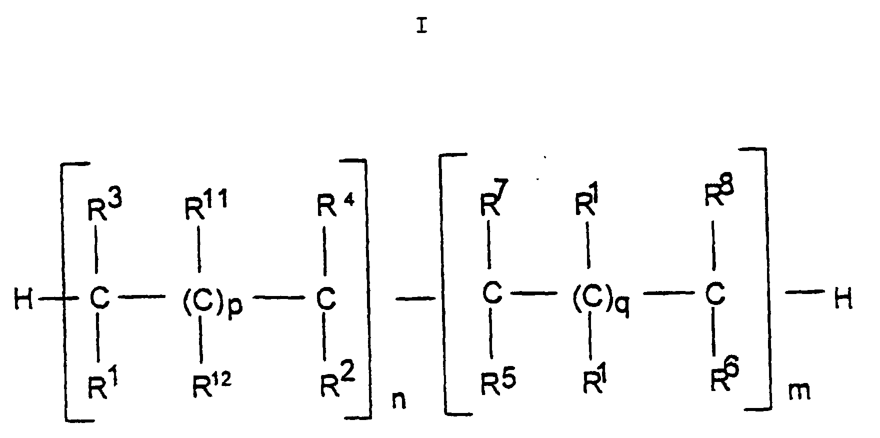 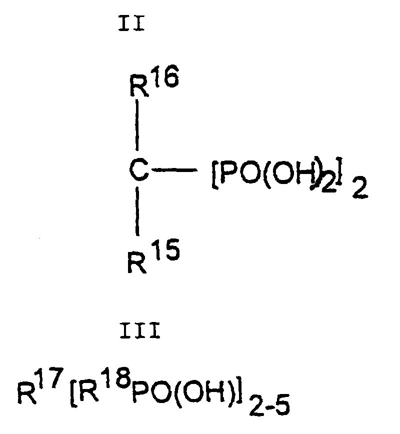 dans laquelle
les composés de la formule I ont un poids moléculaire de 300 à 5000 et R¹ est un hydroxyle, COOH, C₆H₅COOH, NHC (O) R⁹COOH, un hydroxyphényle, COOR⁹ SO₃H, C₆H₅SO₃H, R⁹SO₃H, COOR⁹SO₃H, OSO₃H, C₆H₅OSO₃H, OR⁹SO₃H, OR⁹OSO₃H, OP(OH)₂, R⁹P(OH)₂O, ou un phényle;
R² est un hydrogène ou COOH;
R³ est un hydrogène ou un alkyle C₁-C₄;
R⁴ est un hydrogène ou un alkyle C₁-C₄;
R⁵ est un hydrogène, COOH, C₆H₅COOH, NHC(O)R⁹COOH, un hydroxyphényle, COOR⁹, SO₃H, C₆H₅SO₃H, R⁹SO₃H, COOR⁹SO₃H, HOSO₃H, C₆H₅OSO₃H, OR⁹SO₃H, OR⁹OSO₃H, OP(OH)₂, R⁹P(OH)₂O, un phényle, OR¹⁰, un hydroxyle ou un pyrrolidonyle;
R⁶ est un hydrogène ou COOH;
R⁷ est un hydrogène ou un alkyle C₁-C₄;
R⁸ est un hydrogène ou un alkyle C₁-C₄;
R⁹ est un alkyle C₁-C₄ ou un alkylène;
R¹⁰ est un alkyle C₁-C₄;
R¹¹ est un hydrogène ou CH₃;
R¹² et R¹³ sont un hydrogène;
R¹⁴ est un hydrogène ou CH₃;
R¹⁵ est un hydrogène, un hydroxyle ou un alkyle C₁-C₄;
R¹⁶ est un hydrogène ou un alkyle C₁-C₄;
R¹⁷ est N, NR¹⁹N ou NR⁹NR⁹N;
R¹⁸ est un alkyle C₁-C₄;
R¹⁹ est un alkyle C₁-C₄;
R¹ et R² lorsque pris ensemble sont un anhydride;
R⁵ et R⁶ lorsque pris ensemble sont un anhydride;
n et m sont indépendamment 3-100; et
p et q sont indépendamment 0-3,
et ledit pesticide étant sélectionné à partir du groupe comprenant le propyzamide, la benfluraline, la trifluraline, le S-éthyldipropylthiocarbarmate et le méthyldithiocarbamate de sodium
et (iii) appliquer au sol un herbicide de pré-germination ledit herbicide étant sélectionné à partir du groupe comprenant le propyzamide, la benfluraline, la trifluraline, le S-éthyldipropylthiocarbarmate et le méthyldithiocarbamate de sodium.

3. Méthode selon l'une ou l'autre des revendications précédentes, caractérisée en ce que ledit pesticide est un méthyldithiocarbamate de sodium.

4. Méthode selon l'une quelconque des revendications précédentes, caractérisée en ce qu'un tensioactif est appliqué au sol en mélange avec l'agent de dessalement.

5. Méthode selon la revendication 4, caractérisée en ce que ledit tensioactif est du sulfonate de triéthanolamine-dodécylbenzène.

6. Méthode selon la revendication 5, caractérisée en ce qu'une solution aqueuse à 23,3% d'acide polymaléique, 13,3% de sulfonate de triéthanolamine-dodécylbenzène et 63,4% d'eau est appliquée au sol.

7. Méthode selon l'une quelconque des revendications précédentes, caractérisée en ce qu'un engrais contenant de l'azote et du phosphate est appliqué au sol.

8. Méthode selon la revendication 7, caractérisée en ce que le rapport d'azote à phosphate dans ledit engrais est d'entre 3:1 et 4:1.

9. Méthode selon l'une ou l'autre des revendications 7 ou 8, caractérisée en ce que 20% d'azote dans une solution aqueuse de nitrate d'ammonium est appliquée au sol.

10. Méthode selon l'une quelconque des revendications 7 à 9, caractérisée en ce que le rapport de ladite substance de dessalement du sol audit engrais est d'entre 1 à 216 et 1 à 720.
